Europäisches Patentamt

(19) European Patent Office

Office européen des brevets

(11) Numéro de publication: **0 265 980**
**B1**

(12) **FASCICULE DE BREVET EUROPEEN**

(45) Date de publication du fascicule du brevet:
25.07.90

(21) Numéro de dépôt: 87201867.6

(22) Date de dépôt: 29.09.87

(51) Int. Cl.⁵: **B64B 1/58**

(54) **Procédé et dispositif d'accrochage d'une bande en un matériau souple sur une pièce de fixation et application à l'accrochage d'une enveloppe, notamment de ballon spatial, sur une pièce de fixation.**

(30) Priorité: 13.10.86 FR 8614291

(43) Date de publication de la demande:
04.05.88 Bulletin 88/18

(45) Mention de la délivrance du brevet:
25.07.90 Bulletin 90/30

(84) Etats contractants désignés:
BE CH DE ES FR GB GR IT LI LU NL

(56) Documents cités:
US-A- 2 759 692
US-A- 3 565 368

(73) Titulaire: **CENTRE NATIONAL D'ETUDES SPATIALES (C.N.E.S.) Etablissement public, scientifique et, technique à caractère industriel et commercial 2, place Maurice-Quentin, F-75039 Paris Cédex 01(FR)**

(72) Inventeur: **Regipa, Robert, 226 avenue Saint-Exupéry Bâtiment Provence, F-31400 Toulouse(FR)**

(74) Mandataire: **Barre, Philippe, Cabinet Barre-Gatti-Laforgue 95 rue des Amidonniers, F-31069 Toulouse Cédex(FR)**

## Description

L'invention concerne un procédé d'accrochage, sur une pièce de fixation, d'une bande réalisée en un matériau souple et notamment destinée à être sollicitée longitudinalement en traction. Elle s'applique à un procédé d'accrochage d'une enveloppe réalisée au moyen d'une gaine en un matériau souple sur une pièce de fixation et à un dispositif d'accrochage d'une enveloppe sur une pièce de fixation mettant en oeuvre ce procédé.

L'invention s'applique, en particulier, à l'accrochage de l'enveloppe d'un ballon spatial sur des pièces de fixation situées sur l'axe de cette enveloppe et définissant les pôles supérieur et inférieur de celle-ci.

Les travaux effectués dans le domaine des ballons spatiaux ont conduit à la réalisation de ballons de forme générale cylindrique supportant des surpressions très élevées. En effet, la tenue de la surpression sur les fonds du cylindre est assurée par l'effet simultané de trois actions : l'action de l'enveloppe elle-même, l'action d'un lien interpolaire reliant les deux pôles de l'enveloppe, et l'action d'un réseau externe de renforts longitudinaux. La tenue de la surpression par la paroi cylindrique est quant à elle assurée par la réalisation de lobes longitudinaux séparés par un réseau de renforts circonférentiels assurant, en outre, la reprise de la composante radiale de la tension longitudinale. Des méthodes de calcul éprouvées permettent, dans chaque application, d'ajuster les différents paramètres (densité du réseau circonférentiel, densité du réseau longitudinal...) de façon à optimiser le champ de contraintes s'appliquant sur les enveloppes. La maîtrise de ces différents paramètres permet ainsi la réalisation d'enveloppes souples à haute surpression dont la matériau constitutif (à résistance dissymétrique plus élevée dans le sens longitudinal que dans le sens circonférentiel) travaille dans les meilleures conditions, c'est-à-dire dans chaque direction, à sa limite élastique multipliée par un coefficient de sécurité.

En fait, à l'heure actuelle, seules subsistent des difficultés relatives à l'accrochage des extrémités de l'enveloppe sur les pièces polaires, qui nécessite une étude particulière pour résoudre les problèmes d'interface entre des structures souples et des structures rigides devant supporter des contraintes très importantes. Les différents dispositif d'accrochage existants nécessitent en effet de surdimensionner les pièces polaires du fait des couples de torsion importants auxquels celles-ci sont soumises. De plus, et surtout, ces dispositifs nécessitent la réalisation d'un bourrelet de blocage sur le bord extrême de l'enveloppe. Or, la définition géométrique de ce bourrelet étant rarement parfaite, les différents brins constituant la chaîne longitudinale de l'enveloppe sont soumis à des efforts longitudinaux différents, et il s'ensuit la création d'efforts de cisaillement difficilement paramétrables.

De tels inconvénients se retrouvent également dans les dispositifs tels que décrits dans le brevet US 2 759 692 correspondant aux préambules des revendications 1 et 16, respectivement, dans lesquels l'extrémité de l'enveloppe est maintenue coincée entre deux pièces annulaires autour desquelles et entre lesquelles elle est enroulée. En effet, le bord extrême de l'enveloppe est alors maintenu par frottement entre les deux pièces annulaires, ce qui ne permet pas en pratique de résoudre les problèmes d'interface entre des structures souples et des structures rigides devant supporter des contraintes importantes.

La présente invention se propose de fournir un procédé pour l'accrochage d'une enveloppe sur une pièce de fixation, qui permet la reprise d'efforts importants, tout en assurant l'étanchéité de l'enveloppe, et qui solutionnent les problèmes ci-dessus évoqués.

A cet effet, l'objectif essentiel de l'invention est de fournir un procédé pour l'accrochage d'une enveloppe permettant l'homogénéisation des contraintes dans les différents brins constituant la chaîne longitudinale de cette enveloppe.

Un autre objectif de l'invention est de réduire l'intensité des contraintes de torsion sollicitant les pièces de fixation.

Un autre objectif de l'invention est de fournir un procédé permettant de simplifier et de rendre très précises les différentes opérations permettant l'accrochage d'une enveloppe sur une pièce de fixation.

Un autre objectif de l'invention est de permettre de contrôler les caractéristiques de l'accrochage, avant le gonflage de l'enveloppe.

Un autre objectif est de fournir un procédé pour l'accrochage sur une pièce de fixation des renforts longitudinaux externes permettant la transmission de couples de mise en rotation de l'enveloppe.

Le procédé conforme à l'invention permet l'accrochage d'une extrémité longitudinale d'une bande en un matériau souple, sur une pièce de fixation, et est caractérisé en ce qu'il consiste:
- à replier longitudinalement ladite extrémité sur elle-même au moins une fois, de façon à réaliser au moins un ourlet,
- à froncer transversalement en accordéon, l'extrémité ourlée de façon à réaliser un bourrelet présentant une forme en éventail,
- à utiliser une pièce de fixation dotée d'un logement présentant une section longitudinale de forme évasée conjuguée de la forme du bourrelet, ledit logement possédant une extrémité longitudinale ouverte, vers son sommet,
- à disposer le bourrelet dans le logement précité de la pièce de fixation, la bande s'étendant hors dudit logement par l'extrémité ouverte de ce dernier, de façon à entraîner un auto-blocage du bourrelet lors de la mise en tension de la bande.

Préférentiellement, le procédé consiste à replier l'extrémité de la bande au moins deux fois sur elle-même de façon à réaliser au moins un double ourlet, le dernier ourlet présentant une largeur (1) inférieure à la largeur (L) du précédent.

La réalisation d'au moins un double ourlet de largeur décroissante permet, notamment lors du fronçage de la bande, d'obtenir naturellement la forme en éventail du bourrelet.

Ce procédé autorise une modélisation totale de toutes les opérations effectuées qui permet d'optimiser les formes et de trouver le meilleur compromis pour résoudre les problèmes d'interface. En outre, la géométrie du bourrelet étant parfaitement définie, les différents brins constitutifs de la chaîne longitudinale de la bande sont sollicités indépendamment les uns des autres et sont soumis aux mêmes efforts de traction, d'où la suppression de tout effort de cisaillement entre brins.

Afin d'obtenir une meilleure transmission des efforts sollicitant les extrémités des plis, les faces en regard des ourlets et les faces en regard de deux ourlets successifs sont préférentiellement collées entre elles. Les différents plis des ourlets peuvent également être avantageusement cousus ensemble au moyen de fils en un matériau à haute résistance à la traction. Ainsi, un effort de traction exercé sur la bande entraîne une compression de tous les composants du bloc grâce aux coutures et au collage des différents plis et, par conséquent, un auto-blocage du bourrelet à l'intérieur du logement de la pièce de fixation.

En outre, si les efforts de frottement entre les différents plis des ourlets s'avèrent insuffisants pour permettre un auto-blocage du bourrelet, une résine durcissable est avantageusement injectée dans le logement de la pièce de fixation, après la mise en place du bourrelet. Comme on le comprendra mieux plus loin, ce bloc de résine permet d'obtenir au moins un double effet de coin qui entraîne une augmentation des surfaces de frottement du bourrelet.

Ce bourrelet, noyé dans son bloc de résine, forme donc le talon de reprise des efforts sollicitant la bande, par l'ensemble mécanique rigide que forme la pièce de fixation. Afin de diminuer les dimensions de cette dernière, le logement à l'intérieur duquel est disposé le bourrelet présente, préférentiellement, un axe de symétrie situé dans le prolongement de l'axe longitudinal de la bande. Ainsi, lors d'une mise en tension de cette bande, la pièce de fixation n'est soumise à aucun couple de torsion.

Le procédé s'applique pour l'accrochage d'une enveloppe réalisée au moyen d'une gaine en un matériau souple, sur une pièce de fixation. Il consiste alors :
- à fendre longitudinalement sur une longueur donnée et à intervalles équidistants, une portion extrême de ladite gaine, afin de former une pluralité de bandes,
- à former, conformément au procédé décrit ci-dessus, un bourrelet présentant la forme d'un éventail au niveau du bord extrême de chaque bande ainsi réalisée,
- à utiliser une pièce de fixation annulaire réalisée au moyen d'un matériau rigide et possédant un logement annulaire présentant une section ayant la forme d'un secteur circulaire conjugué de la forme des bourrelets, ledit logement étant doté, vers son sommet, d'une ouverture débouchant au niveau de la paroi périphérique de la pièce de fixation, sur tout le pourtour de celle-ci,
- à disposer les différents bourrelets les uns à côté des autres à l'intérieur du logement précité de la pièce de fixation.

Les différents bourrelets sont donc disposés dans le logement annulaire de la pièce de fixation puis noyés dans de la résine durcissable de façon à former un talon de reprise par l'ensemble mécanique. En outre, une multiplication du nombre de ces bourrelets permet d'obtenir une bonne définition du système de révolution et la constitution d'un bloc homogène à faible pas angulaire.

Par ailleurs, afin de faciliter la mise en place des différents bourrelets à l'intérieur du logement annulaire, la pièce de fixation est préférentiellement démontable en deux pièces annulaires possédant des faces en regard de forme adaptées pour former le logement annulaire, dans la position assemblée desdites pièces.

Le logement annulaire est, en outre, avantageusement ménagé au coeur de la pièce de fixation, et l'assemblage des deux pièces annulaires est réalisé au moyen d'organes de vissage disposés de part et d'autre dudit logement annulaire. Cette disposition des organes de vissage permet de diminuer notablement la masse des pièces de fixation ; les organes de vissage positionnés du côté externe garantissent, en effet, un assemblage rigide des pièces annulaires lors de la mise en tension de l'enveloppe.

Cette diminution de la masse de la pièce de fixation est également favorisée par la disposition du logement annulairement qui possède, avantageusement, un plan de symétrie transversal sensiblement orthogonal à l'axe de la gaine. Lors de la mise en tension de l'enveloppe, la pièce de fixation n'est donc soumise à aucun couple de torsion.

L'étanchéité de l'enveloppe est, quant à elle, préférentiellement assurée par une bavette étanche fixée, d'une part, sur la face interne de l'enveloppe au droit de l'extrémité des fentes longitudinales de façon à servir de bande d'arrêt desdites fentes et, d'autre part, sur la pièce de fixation. Cette bavette étanche remplit ainsi la double fonction de bande d'arrêt des déchirures longitudinales et de moyen d'étanchéité de l'enveloppe. On constate, par ailleurs, que les fonctions de résistance mécanique (transmission des contraintes longitudinales) et d'étanchéité sont remplies par des éléments distincts. De ce fait, l'étanchéité n'étant plus assurée par l'enveloppe elle-même, les problèmes posés par la réalisation de fentes longitudinales et la mise en place d'organes de vissage du côté externe du logement annulaire se trouvent résolus.

Ce procédé s'applique plus particulièrement pour l'accrochage d'une enveloppe de forme générale cylindrique telle que décrite dans le brevet français n° 2 472 971 au nom du demandeur, c'est-à-dire réalisée par l'assemblage longitudinal de N fuseaux rectangulaires de même largeur. Le procédé consiste alors à interrompre l'assemblage desdits fuseaux à une distance déterminée de leur extrémité longitudinale afin de former une pluralité de bandes, et à façonner le bord extrême de chaque bande de façon à réaliser, conformément au procédé décrit ci-dessus, une pluralité de bourrelets présentant une forme en éventail.

La portion extrême de chaque fuseau peut, en outre, être également divisée en plusieurs bandes de même largeur séparées par une fente longitudinale et dont le bord extrême est façonné de façon à réaliser un bourrelet en forme d'éventail. Cette multiplication des bourrelets permet, en effet, d'obtenir la constitution d'un bloc homogène à plus faible pas angulaire. Mais le principal avantage du procédé, dans cette application particulière, réside dans la possibilité de tester individuellement chaque fuseau. Les contraintes de fabrication et de sécurité sont donc notablement diminuées et la conception mécanique globale de l'accrochage de l'enveloppe sur une pièce de fixation est beacoup plus saine que pour les procédés existants.

Le procédé permet, enfin, l'accrochage sur une pièce de fixation annulaire d'un réseau de renforts s'étendant longitudinalement le long d'une enveloppe de forme générale cylindrique. Il consiste alors à disposer lesdits renforts de façon qu'ils forment une structure rayonnante à rayons croisés sur le fond de l'enveloppe. Le réseau longitudinal permet alors la transmission à cette enveloppe de couples de mises en rotation de celle-ci.

L'accrochage du réseau de renforts, sur la pièce de fixation, peut consister avantageusement:

– à utiliser une jante annulaire comprenant une face périphérique externe dotée d'une gorge annulaire et des chants périphériques dotés chacun de tenons,
– à fixer la jante précitée concentriquement autour de la pièce de fixation,
– à accrocher les renforts longitudinaux, alternativement, sur les tenons de l'un et l'autre chant périphérique de la jante,
– à disposer dans la gorge annulaire de la jante un collier de serrage réalisé en un matériau peu extensible de haute résistance à la traction en vue de reprendre les efforts longitudinaux sollicitant les renforts, par la mise en tension dudit collier de serrage.

Ce mode opératoire présente trois avantages essentiels qui autorisent la reprise de tensions longitudinales très élevées:
– reprise des efforts longitudinaux sollicitant les renforts par le collier de serrage mis en tension suivant sa direction préférentielle de déformation,
– forme annulaire de la jante qui entraîne un auto-équilibrage des efforts sollicitant le collier de serrage: les efforts transmis à la pièce de fixation sont donc très faibles,
– accrochage des renforts, alternativement, sur l'un et l'autre chant périphérique, qui permet de soumettre la jante à des efforts symétriques, évitant sa sollicitation en torsion.

L'invention s'étend à un dispositif pour l'accrochage d'une enveloppe réalisée au moyen d'une gaine en matériau souple sur une pièce de fixation annulaire réalisée en un matériau rigide et formée de deux pièces annulaires. Selon la présente invention, ce dispositif se caractérise en ce que, d'une part, les pièces annulaires possèdent des faces d'assemblage en regard de formes adaptées pour former un logement annulaire présentant une section de forme évasée et destiné à recevoir des bourrelets de l'enveloppe et, d'autre part, la pièce de fixation comprend une face périphérique externe dotée d'une fente annulaire débouchant dans le logement, vers le sommet de ce dernier.

D'autres caractéristiques, buts et avantages de l'invention se dégageront de la description détaillée qui suit et de l'examen des dessins annexés qui en présentent, à titre d'exemple non limitatif, un mode de réalisation préférentiel. Sur ces dessins qui font partie intégrante de la description:

– les figures 1a et 1b sont des coupes schématiques à échelle dilatée illustrant la réalisation d'un double ourlet conformément au procédé de l'invention,
– la figure 2 est une vue en plan partielle de la portion extrême de l'enveloppe telle que préparée en vue de réaliser son fronçage,
– la figure 3 est une coupe transversale à échelle dilatée d'un bourrelet en forme d'éventail conforme à l'invention,
– la figure 4 est une coupe schématique à échelle dilatée illustrant la réalisation d'un triple ourlet,
– la figure 5 est une coupe longitudinale d'un dispositif d'accrochage d'une enveloppe sur une pièce de fixation située au niveau du pôle supérieur de cette enveloppe,
– la figure 6 est une coupe longitudinale d'un dispositif d'accrochage d'une enveloppe sur une pièce de fixation située au niveau du pôle inférieur de l'enveloppe,
– la figure 7 est une demi-coupe transversale par un plan A–A représentant des moyens d'accrochage du réseau de renforts longitudinaux de cette enveloppe,
– la figure 8 est une coupe longitudinale représentant un deuxième mode de réalisation des moyens d'accrochage des renforts longitudinaux.

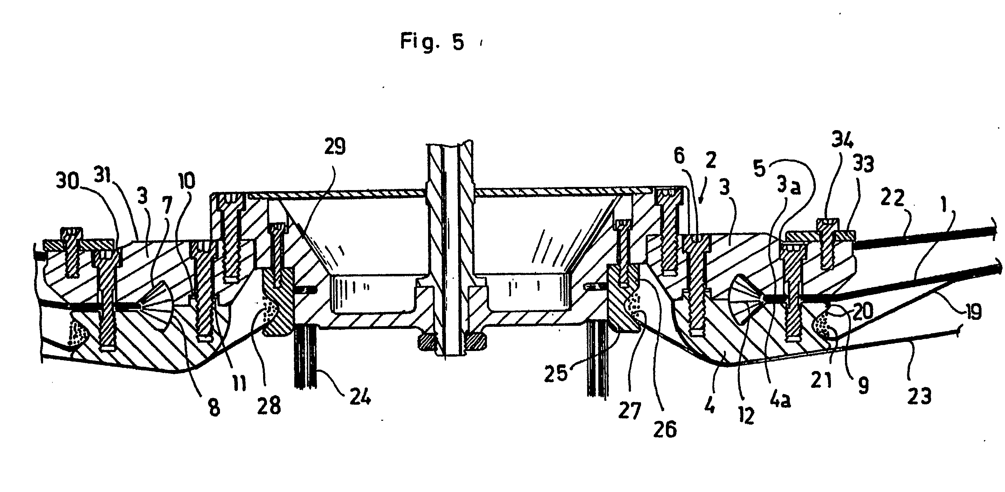

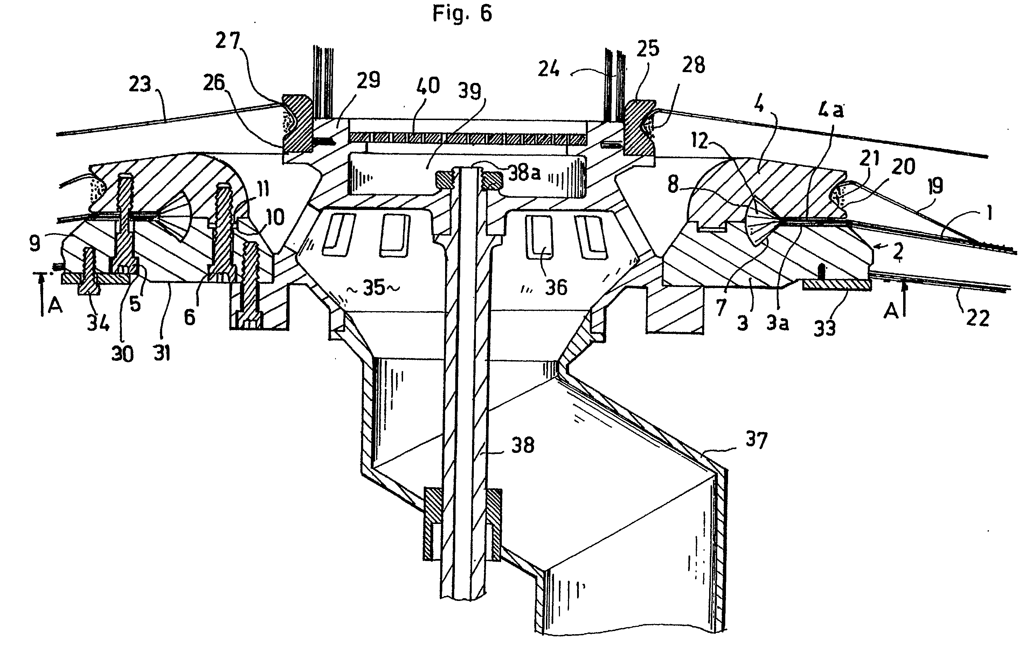

Le dispositif d'accrochage représenté à titre d'exemple aux figures 5 et 6 est destiné à l'accrochage des extrémités d'une enveloppe 1 sur des pièces polaires disposées aux pôles inférieur et supérieur de cette enveloppe, sur l'axe de celle-ci. Il s'applique en particulier à l'accrochage, sur des pièces polaires, des extrémités d'une enveloppe de ballon spatial de forme générale cylindrique réalisée par l'assemblage longitudinal de N fuseaux rectangulaires.

Cette enveloppe 1, telle que par exemple décrite dans la demande de brevet EP-A 0 184 262 au nom du demandeur, est composée d'un matériau composite comprenant une chaîne longitudinale en "Kevlar" et une trame circonférentielle en polyester, d'un film extérieur en polyéthylène et d'un film intérieur en polyester.

Ce dispositif comprend une pièce de fixation 2 de forme annulaire réalisée en un matériau rigide. Cette pièce de fixation est constituée de deux pièces annulaires 3, 4 aptes à être assemblées au moyen de vis de fixation 5, 6. Ces deux pièces annulaires 3, 4 possèdant des faces d'assemblage 3a, 4a en regard, dotées, chacune, dans leur zone centrale, d'une gorge annulaire 7 présentant la forme d'un secteur circulaire, les angles au sommet de chaque gorge 7 étant identiques et orientés côtés paroi périphérique 9 de la pièce de fixation 2. Ainsi, dans la position assemblée de ces deux pièces annulaires 3, 4, la pièce de fixation 2 est dotée d'un logement annulaire 8 présentant une section ayant la forme d'un secteur circulaire dont l'axe de symétrie est orthogonal à l'axe de l'enveloppe 1. En outre, la pièce de fixation 2 comprend une face périphérique externe 9 dotée d'une fente annulaire débouchant dans le logement 8 précité, vers le sommet de ce dernier.

Par ailleurs, un positionnement correct des deux pièces annulaires 3, 4 en regard l'une de l'autre, est assuré par une gorge annulaire 10 ménagée sur la face d'assemblage 3a de l'une d'elles, côté interne du logement annulaire 8, à l'intérieur de laquelle vient se loger un tenon annulaire 11 de forme conjuguée, en saillie sur la face d'assemblage 4a de la deuxième pièce.

Une fois leur positionnement assuré, l'assemblage de ces deux pièces annulaires 3, 4 est obtenu au moyen de vis de fixation 5, 6 aptes à être vissées dans des alésages taraudés ménagés de part et d'autre du logement annulaire 8.

Dans le logement annulaire 8, sont disposés une pluralité de bourrelets 12 en forme d'éventails de formes conjuguées de ce logement, et réalisés sur le bord extrême de chaque fuseau 13 constituant l'enveloppe 1.

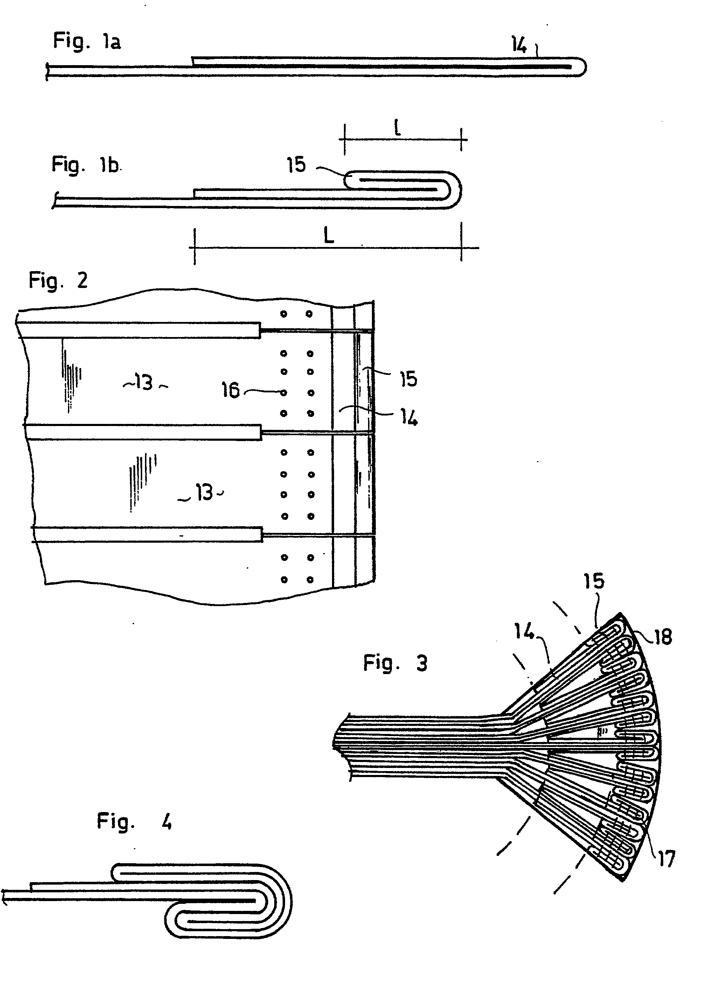

Le mode de réalisation de ces bourrelets 12 est décrit ci-après en référence aux figures 1, 2 et 3 Dans une phase préliminaire, les différents fuseaux 13 sont disposés sur une table d'assemblage sur laquelle ils sont maintenus en tension. Ces fuseaux 13 sont ensuite assemblés longitudinalement, cet assemblage étant interrompu à une distance donnée de leurs extrémités longitudinales. Ils sont ensuite découpés transversalement au niveau d'au moins une de leurs extrémités longitudinales, de façon à obtenir des fuseaux de longueurs strictement identiques.

Les bords extrêmes de chaque fuseau sont ensuite repliés une première fois sur eux-mêmes afin de constituer un premier ourlet (figure 1a), puis une deuxième fois afin de constituer un deuxième ourlet 15 de largeur (1) inférieure à la largeur (L) du premier ourlet 14 (figure 1b). L ors de ces opérations de pliage, les largeurs (1) et (L) des ourlets 14, 15 sont parfaitement déterminées par l'utilisation de deux butées disposées successivement au droit de l'extrémité longitudinale du fuseau.

Une fois le double ourlet 14, 15 réalisé, le bord extrême de chaque fuseau 13 est froncé transversalement, en accordéon, de façon à former un bourrelet 12 en forme d'éventail. Lors de ce plissage, la forme en éventail est obtenue naturellement, le deuxième ourlet 15 présentant une largeur (1) inférieure à celle (L) du premier ourlet 14.

En outre, afin d'obtenir un éventail de forme régulière dont les différentes fronces sont de même largeur, le fuseau 13 est doté transversalement d'au moins deux séries identiques de lumières 16 pratiquées à des distances déterminées de son extrémité longitudinale. Chaque série est composée de lumières 16 disposées à intervalles équidistants correspondant à la largeur des fronces de l'éventail (figure 2). Ainsi, lors du plissage, il suffit d'utiliser un gabarit doté de deux tiges espacées d'une longueur équivalente à la distance séparant les deux séries de lumières 16 ; la réalisation des différentes fronces est alors obtenue en positionnant successivement les lumières 16 en vis-à-vis des deux séries sur les tiges du gabarit.

Le bourrelet 12 étant réalisé, celui-ci est redéplié afin d'enduire les différents plis au moyen d'une résine durcissable. Les ourlets 14, 15 sont ensuite reconstitués et cousus au moyen de fils 17 en "Kevlar". Finalement, le bourrelet 12 est lui-même reconstitué et disposé dans un moule 18 de forme identique au logement annulaire 8 de la pièce de fixation 2. En outre, la forme de ce moule est adaptée pour obtenir une tangence des extrémités du premier ourlet 14 de deux fronces voisines. La position relative des différentes fronces et, par conséquent, la forme globale du bourrelet 12, sont donc parfaitement définies.

A l'intérieur de ce moule 18, l'ourlet est noyé dans une résine durcissable qui permet d'obtenir un double effet de coin (selon les lignes C, C' de la figure 3) dont l'intérêt réside dans l'augmentation des surfaces de frottement sollicitées lors d'une mise en compression du bourrelet 12.

Cet effet de coin ayant une importance primordiale pour la tenue de l'assemblage, il peut également être envisagé de replier à nouveau, sur lui-même, le double ourlet (14, 15), autour du premier ourlet 14, tel que représenté à la figure 4.

La réalisation de ce troisième ourlet permet d'obtenir un effet de coin supplémentaire selon la ligne C' de la figure 3 et, par conséquent, constitue un élément supplémentaire visant à garantir l'auto-blocage du bourrelet. De plus, ce troisième ourlet permet de soumettre chaque fronce du bourrelet à des efforts symétriques par rapport à l'axe de ces dernières.

Ainsi, après les opérations de collage et de couture des plis des ourlets 14, 15, de collage des fronces de l'éventail, et d'injection d'une résine durcissable, le bourrelet 12 forme un bloc homogène dont toutes les surfaces de frottement sont sollicitées. La mise en tension du fuseau 13 entraîne donc une compression de tous les composants du bourrelet 12 et l'auto-blocage de ce dernier à l'intérieur de son logement.

Il est à noter que toutes les caractéristiques géométriques (largeur (1) et (L) des ourlets, largeur des fronces, position relative de ces fronces...) déterminant la forme du bourrelet 12 sont parfaitement définies. Il est donc aisé de mettre au point une méthode de calcul qui permet d'optimiser ces paramètres et de trouver le meilleur compromis pour résoudre les problèmes d'interface entre une structure souple et une structure rigide. De plus, les différents brins constituant la chaîne longitudinale de l'enveloppe sont sollicités indépendamment les uns des autres et soumis aux mêmes efforts de traction. La résistance de l'enveloppe 1 n'est donc, notamment, pas altérée par la présence des fentes ménagées sur la portion extrême des fuseaux, ces dernières étant pratiquées longitunalement, parallèlement aux fils de chaîne.

En outre, chaque fuseau 13 peut être testé individuellement avant l'accrochage de l'enveloppe sur les pièces de fixation. La fiabilité des ballons spatiaux se trouve donc notablement accrue.

La pluralité de bourrelets étant réalisée, ces derniers sont disposés à l'intérieur du logement annulaire 8 des pièces de fixation 2. Les interstices séparant ces bourrelets 12 sont alors remplis au moyen d'une résine durcissable injectée par l'intermédiaire de trous d'injection ménagés dans cette pièce de fixation 2. L'ensemble des bourrelets 12, noyés dans la résine, forme donc un bloc homogène permettant la reprise des efforts sollicitant l'enveloppe 1, par la pièce de fixation 2.

Il est à noter qu'une meilleure définition du système de révolution et la constitution d'un bloc homogène à plus faible pas angulaire peuvent être obtenues en multipliant le nombre de bourrelets 12. Dans ce but, la portion extrême de chaque fuseau 13 peut être divisée en plusieurs bandes séparées, sur une longueur équivalente à la longueur non assemblée de ces fuseaux, par une fente longitudinale. Plusieurs bourrelets 12 identiques peuvent ainsi être réalisés au niveau du bord extrême de chaque fuseau 13.

Etant donné la présence des lumières 16 permettant le fronçage des fuseaux 13, des fentes longitudinales séparant ces fuseaux, et des percements pour le passage des vis de fixation 5 assurant l'assemblage des deux pièces annulaires 3, 4, l'étanchéité du ballon spatial ne peut être assurée par l'enveloppe 1 elle-même.

A cet effet, il est prévu d'utiliser une bande 19 de film étanche fixée d'une part sur la pièce de fixation 2 et d'autre par sur la face interne de l'enveloppe 1 au niveau de l'extrémité des fentes longitudinales.

Une des extrémités de cette bande 19 est disposés dans une gorge annulaire 20 ménagée sur la face périphérique externe 9 de la pièce de fixation 2. Le blocage de cette bande 19 est assuré par l'enroulement dans cette gorge d'un câble 21 du type "Kevlar". L'autre extrémité est, quant à elle, soudée puis cousue sur l'enveloppe 1 et fait office de bande d'arrêt des déchirures séparant les différents fuseaux 13.

De plus, cette bande en film étanche 19 est d'une longueur appropriée pour éviter sa sollicitation en traction lors de la mise en tension de l'enveloppe 1.

Le dispositif d'accrochage illustré aux figures 5 et 6 permet l'accrochage sur la pièce de fixation, d'un ballon aérostatique pilotable comprenant une enveloppe externe 1 contenant de l'air et telle que décrite ci-dessus, un réseau de renforts longitudinaux 22, un réseau de renforts circonférentiels (non représentés), une enveloppe interne 23 contenant un gaz plus léger que l'air et un lien interpolaire 24 reliant les pôles inférieur et supérieur de l'enveloppe externe.

Le dispositif comprend, pour l'accrochage de l'enveloppe interne 23, une jante 25 en un matériau rigide. Cette jante 25 est dotée, sur sa face périphérique externe 26, d'une gorge périphérique annulaire 27 à l'intérieur de laquelle est disposée l'extrémité de l'enveloppe 23. Le blocage est assuré par l'enroulement d'un câble 28 en un matériau peu extensible de haute résistance à la traction, du type "Kevlar". De diamètre inférieur au diamètre de la pièce de fixation 2, cette jante 25 est fixée concentriquement sur cette pièce par l'intermédiaire d'une couronne 29 de diamètre intermédiaire, solidarisée à cette jante 25 et à la pièce de fixation 2.

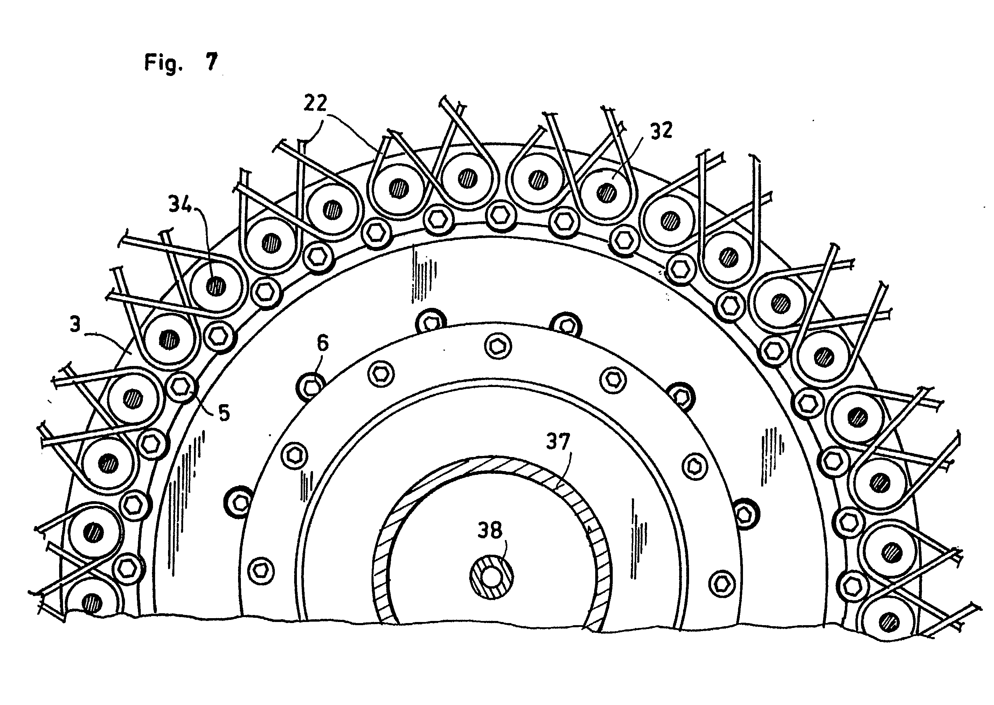

Le dispositif comprend également des moyens d'accrochage des renforts longitudinaux 22, ménagés sur la pièce annulaire 3 positionnée à l'extérieur de l'enveloppe externe 1. Cess moyens d'accrochage comportent un décrochement annulaire 30 ménagé du côté externe de la face 31, opposée à la face d'assemblage 3a, de cette pièce annulaire 3. Dans le fond de ce décrochement 30 sont disposées une pluralité de tenons tels que 32 (figure 7).

Les renforts longitudinaux 22 constitués de câbles sans fin réalisés au moyen de tresses en "Kevlar" épissurées et surliées, sont enroulés de 180 degrés autour des tenons 32 et répartis de façon à former une structure rayonnante à rayons croisés sur le fond de l'enveloppe externe 1 (figure 7). Cette disposition permet la transmission à l'enveloppe 1 de couples de mise en rotation de celle-ci.

Afin d'éviter l'échappement des renforts longitudinaux 22, les tenons 32 sont recouverts par un couvercle annulaire 33 prenant appui sur ces tenons 32 et sur la face 31, et fixé sur la pièce annulaire 3 au moyen de vis de fixation 34.

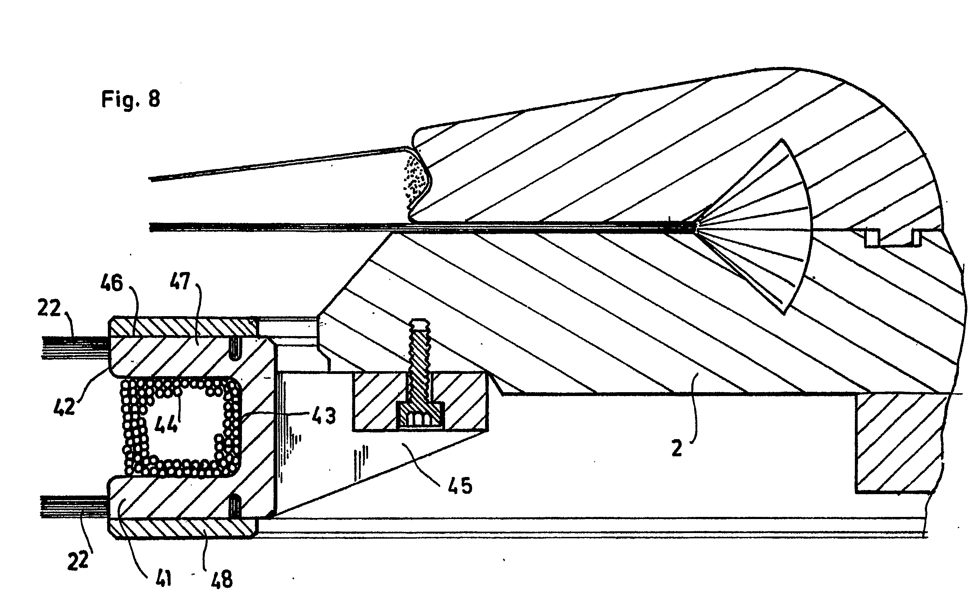

Lors de la réalisation d'enveloppes soumises à des efforts de surpression très importants, les moyens d'accrochage des renforts longitudinaux 22 sur la pièce de fixation 2, décrits ci-dessus, peuvent être avantageusement remplacés par les moyens d'accrochage représentés à la figure 8.

Ces moyens d'accrochage comprennent une jante 41 réalisée en un matériau rigide. Cette jante 41 est dotée, sur sa face périphérique externe 42, d'une gorge annulaire 43 à l'intérieur de laquelle est enroulé un câble 44 en un matériau peu extensible de haute résistance à la traction. De diamètre supérieur au diamètre de la pièce de fixation, cette jante est fixée concentriquement sur cette dernière pas l'intermédiaire de bras radiaux 45, ou par tout autre moyen connu en soi.

Les chants périphériques 46 de cette jante 41 sont dotés, chacun, d'une pluralité de tenons 47. L'accrochage des renforts 22 consiste à disposer ces derniers autour des tenons 47, comme décrit précédemment, leur échappement éventuel, après leur mise en place, étant évité grâce à l'apposition de couvercles 48.

L'intérêt de ce dispositif d'accrochage provient du fait que les renforts 22 sont accrochés, alternativement, sur l'un et l'autre chant périphérique 46 de la jante 41. Ainsi, la jante soumise à des efforts symétriques n'est pas sollicitée en torsion.

De plus, l'auto-équilibrage des efforts au niveau de ce dispositif, dû à la forme annulaire de la jante 41, limite considérablement les efforts transmis à la pièce de fixation 2.

Les pièces de fixation 2 sont, enfin, munies de moyens d'admission et de rejet d'air et également de moyens d'admission et de rejet d'hélium.

Les moyens d'admission et de rejet d'air sont ménagés sur la pièce de fixation 2 située au niveau du pôle inférieur de l'enveloppe 1 (figure 6). A cet effet, la couronne 29 forme une chambre interne 35 qui communique par des lumières 36 avec l'intérieur de l'enveloppe externe 1.

Le conduit d'amenée d'air 37 est équipé d'une vanne trois voies (non représentée) qui permet soit de réaliser une évacuation d'air, soit d'admettre de l'air comprimé provenant d'un turbo-compresseur (ou autre moyen équivalent).

Le gonflage à l'hélium de l'enveloppe interne s'effectue à travers un conduit 38 qui traverse de façon étanche la couronne 29 pour déboucher dans une chambre de détente 39 un orifice 38a situé sur l'axe du ballon. Pour éviter toute détérioration de l'enveloppe interne, cette chambre de détente 39 communique avec l'intérieur de cette enveloppe interne pour l'intermédiaire d'une grille 40 dotée de lumières de faible section.

**Revendications**

1. Procédé d'accrochage d'une extrémité longitudinale d'une bande en une matériau souple, sur une pièce de fixation, caractérisé en ce qu'il consiste:
   - à replier longitudinalement ladite extrémité sur elle-même au moins une fois, de façon à réaliser au moins un ourlet (14, 15),
   - à froncer transversalement en accordéon, l'extrémité ourlée de façon à réaliser un bourrelet (12) présentant une forme en éventail,
   - à utiliser une pièce de fixation dotée d'un logement (8) présentant une section longitudinale de forme évasée conjuguée de la forme du bourrelet, ledit logement possédant une extrémité longitudinale ouverte, vers son sommet,
   - à disposer le bourrelet (12) dans le logment précité de la pièce de fixation, la bande s'étendant hors dudit logement par l'extrémité ouverte de ce dernier, de façon à entraîner un auto-blocage du bourrelet lors de la mise en tension de la bande.

2. Procédé selon la revendication 1, caractérisé en ce qu'il consiste à replier l'extrémité de la bande au moins deux fois sur elle-même de façon à réaliser au moins un double ourlet (14, 15), le dernier ourlet (15) présentant une largeur (1) inférieure à la largeur (L) du précédent.

3. Procédé selon l'une des revendications 1 ou 2, caractérisé en ce qu'il consiste à ménager le logement de la pièce de fixation de façon que son axe de symétrie soit situé dans le prolongement de l'axe longitudinal de la bande.

4. Procédé selon l'une des revendications 1, 2 ou 3, caractérisé en ce qu'il consiste à coller entre elles les faces en regard de chaque ourlet (14, 15), et les faces en regard de deux ourlets successifs.

5. Procédé selon l'une des revendications 1, 2, 3 ou 4, caractérisé en ce qu'il consiste à coudre les différents plis des ourlets (14, 15) au moyen de fils (17) en un matériau de haute résistance à la traction.

6. Procédé selon l'une des revendications 1, 2, 3, 4 ou 5, caractérisé en ce qu'il consiste à injecter une résine durcissable dans le logement de la pièce de fixation, après la mise en place du bourrelet (12) de façon à noyer ledit bourrelet dans ladite résine.

7. Procédé selon l'une des revendications précédentes pour l'accrochage d'une enveloppe (1) réalisée au moyen d'une gaine en un matériau souple, sur une pièce de fixation (2), caractérisé en ce qu'il consiste:
   - à fendre longitudinalement sur une longueur donnée et à intervalles équidistants, une portion extrême de ladite gaine, afin de former une pluralité de bandes,
   - à former, conformément à l'une des revendications 1, 2, 3, 4 ou 5, un bourrelet (12) présentant la forme d'un éventail au niveau du bord extrême de chaque bande ainsi réalisée,
   - à utiliser une pièce de fixation annulaire (2) réalisée au moyen d'un matériau rigide et possédant un logement annulaire (8) présentant une section ayant la forme d'un secteur circulaire conjugué de la forme des bourrelets (12), ledit logement étant doté, vers son sommet, d'une ouverture débouchant au niveau de la paroi périphérique (9) de la pièce de fixation (2), sur tout le pourtour de celle-ci,
   - à disposer les différents bourrelets (12) les uns à côté des autres à l'intérieur du logement (8) précité de la pièce de fixation (2).

8. Procédé selon la revendication 7, caractérisé en ce qu'il consiste à ménager le logement annulaire (8) de la pièce de fixation de façon que son plan de symétrie transversal soit sensiblement orthogonal à l'axe de la gaine.

9. Procédé selon l'une des revendications 7 ou 8 pour l'accrochage, sur une pièce de fixation (2), d'une enveloppe (1) de forme générale cylindrique réalisée au moyen de fuseaux (13) rectangulaires de même largeur, assemblés longitudinalement, caractérisé en ce qu'il consiste à interrompre l'assemblage desdits fuseaux à une distance déterminée de leur extrémité longitudinale afin de former une pluralité de bandes, et à façonner le bord extrême de chaque bande de façon à réaliser, conformément à l'une des revendications 1, 2, 3, 4 ou 5, une pluralité de bourrelets (12) présentant une forme en éventail.

10. Procédé selon l'une des revendications 7, 8 ou 9, caractérisé en ce que la pièce de fixation (2) est démontable en deux pièces annulaires (3, 4) possédant des faces (3a, 4a) en regard de formes adaptées pour former le logement annulaire (8), dans la position assemblée desdites pièces.

11. Procédé selon la revendication 10, caractérisé en ce que le logement annulaire (8) est ménagé au cœur de la pièce de fixation et en ce qu'il consiste à assembler les deux pièces annulaires (3, 4) au moyen d'organes de vissage (5, 6) disposés de part et d'autre dudit logement annulaire.

12. Procédé selon l'une des revendications 7 à 11, caractérisé en ce qu'il consiste à utiliser une bavette étanche (19) fixée, d'une part, sur la face interne de l'enveloppe (1) au droit de l'extrémité des fentes longitudinales, de façon à servir de bande d'arrêt desdites fentes et, d'autre part, sur la pièce de fixation (2).

13. Procédé selon la revendication 12, caractérisé en ce qu'il consiste à utiliser une bavette étanche (19) de longueur adaptée pour permettre sa non-sollicitation en traction, lors de la mise en tension de l'enveloppe (1).

14. Procédé selon l'une des revendications 7 à 13 pour l'accrochage sur une pièce de fixation annulaire (2) d'un réseau de renforts (22) s'étendant longitudinalement le long d'une enveloppe de forme générale cylindrique, ledit procédé étant caractérisé en ce qu'il consiste à disposer lesdits renforts sur ladite pièce de fixation de façon qu'ils forment une structure rayonnante à rayons croisés sur le fond de ladite enveloppe.

15. Procédé selon la revendication 14 pour l'accrochage sur une pièce de fixation d'un réseau de renforts longitudinaux (22), caractérisé en ce qu'il consiste:
  – à utiliser une jante annulaire (41) comprenant une face périphérique externe (42) dotée d'une gorge annulaire (43) et des chants périphériques (46) dotés chacun de tenons (47),
  – à fixer la jante (41) précitée concentriquement autour de la pièce de fixation (2),
  – à accrocher les renforts longitudinaux (22) alternativement, sur les tenons (47) de l'un et l'autre chant périphérique (46) de la jante (41),
  – à disposer dans la gorge annulaire (43) de la jante (41) un collier de serrage (44) réalisé en un matériau peu extensible de haute résistance à la traction en vue de reprendre les efforts longitudinaux sollicitant les renforts, par la mise en tension dudit collier de serrage.

16. Dispositif pour la mise en œuvre d'un procédé conforme à la revendication 7, destiné à l'accrochage d'une enveloppe (1) réalisée au moyen d'une gaine en un matériau souple, sur une pièce de fixation annulaire (2) réalisée en en matériau rigide et formée de deux pièces annulaires (3, 4), ledit dispositif étant caractérisé en ce que, d'une part, les deux pièces annulaires (3, 4) possèdent des faces d'assemblage (3a, 4a) en regard de formes adaptées pour former un logement annulaire (8) présentant une section de forme évasée et destiné à recevoir des bourrelets de l'enveloppe et, d'autre part, la pièce de fixation (2) comprend une face périphérique externe (9) dotée d'une fente annulaire débouchant dans le logement (8), vers le sommet de ce dernier.

17. Dispositif selon la revendication 16, caractérisé en ce que le logement annulaire (8) présente une section ayant la forme d'un secteur circulaire d'axe de symétrie orthogonal à l'axe du ballon.

18. Dispositif selon l'une des revendications 16 ou 17, caractérisé en ce que le logement annulaire (8) est ménagé au cœur de la pièce de fixation (2), ledit dispositif comprenant:
  – une bavette étanche (19) fixée, d'une part, sur la face interne de la gaine, de façon à faire office de bande d'arrêt des fentes longitudinales ménagées sur la portion extrême de ladite gaine et, d'autre part, sur la pièce de fixation (2),
  – des moyens d'assemblage des deux pièces annulaires (3, 4), comportant des organes de vissage (5, 6) disposés de part et d'autre du logement annulaire (8).

19. Dispositf selon l'une des revendications 16, 17 ou 18 pour l'accrochage sur une pièce de fixation (2) d'une enveloppe (1) de forme générale cylindrique renforcée extérieurement par un réseau de renforts (22) s'étendant longitudinalement le long de cette enveloppe, ledit dispositif étant caractérisé en ce qu'il comprend des moyens d'accrochage (30, 32, 33, 34; 41–48) desdits renforts aptes à permettre leur disposition selon une structure rayonnante à rayons croisés, sur le fond de ladite enveloppe.

20. Dispositif selon la revendication 19, caractérisé en ce que les moyens d'accrochage des renforts longitudinaux (22) comprennent:
  – une jante (41) en un matériau rigide ayant une face périphérique externe (42) dotée d'une gorge annulaire (43), ladite jante comportant des chants périphériques (46) dotés chacun d'une pluralité de tenons (47) en saillie,
  – des moyens de fixation (45) de la jante (41) sur la pièce de fixation (2) adaptés pour positionner ladite jante concentriquement par rapport à ladite pièce de fixation,
  – un collier de serrage (44) disposé dans la gorge annulaire (43) et constitué par un câble en un matériau peu extensible à haute résistance à la traction enroulé à l'intérieur de cette gorge.

## Patentansprüche

1. Verfahren zur Befestigung eines Längsendes eines Bandes aus weichem Material an einem Befestigungsteil, dadurch gekennzeichnet, daß es in den folgenden Operationen besteht:
  – in mindestens einmaligem Rückfalten auf sich selbst der Länge nach des besagten Endes, um mindestens einen Saum (14, 15) zu erzeugen,
  – im Querfalten in der Form eines Faltenbalgs des Saumendes, um ein Kissen (12) in der Form eines Fächers zu erzielen,
  – in der Verwendung eines Befestigungsteils mit einem Gehäuse (8), dessen Längsschnitt eine der Form des Kissens entsprechende sich erweiternde Form aufweist, wobei das besagte Gehäuse auf seinen Scheitel zu ein offenes der Länge nach verlaufendes Ende besitzt,
  – in Anordnung des Kissens (12) in dem besagten Gehäuse des Befestigungsteils, wobei sich das Band aus dem besagten Gehäuse durch dessen offenes Ende hindurch nach außen erstreckt, so daß das Kissen bei Ausübung einer Zugspannung auf das Band selbsttätig blockiert wird.

2. Verfahren nach Anspruch 1, dadurch gekennzeichnet, daß es in mindestens zweimaligem Zurückfalten des Bandendes auf sich selbst besteht, um mindestens einen Doppelsaum (14, 15) zu erzeugen, wobei der letztere Saum (15) eine Breite (1) hat, die geringer ist als die Breite (L) des ersteren Saumes.

3. Verfahren nach einem der Ansprüche 1 oder 2, dadurch gekennzeichnet, daß es darin besteht, das Gehäuse des Befestigungsteils so anzuordnen, daß dessen Symmetrieachse in der Verlängerung der Längsachse des Bandes liegt.

4. Verfahren nach einem der Ansprüche 1, 2 oder 3, dadurch gekennzeichnet, daß es darin besteht, die gegenüberliegenden Oberflächen jedes Saumes (14, 15) und die gegenüberliegenden Flächen der beiden anschließenden Säume miteinander zu verkleben.

5. Verfahren nach einem der Ansprüche 1, 2, 3 oder 4, dadurch gekennzeichnet, daß es darin besteht, daß die verschiedenen Falten der Säume (14, 15) mit Hilfe von Fäden (17) aus einem Material hoher Zugfestigkeit genäht werden.

6. Verfahren nach einem der Ansprüche 1, 2, 3, 4 oder 5, dadurch gekennzeichnet, daß es darin besteht, einen härtbaren Harz in das Gehäuse des Befestigungsteils einzuspritzen, nachdem Kissen (12) eingebracht wurde, um das besagte Kissen in dem besagten Harz zu tränken.

7. Verfahren nach einem der vorstehenden Ansprüche zur Befestigung einer Ummantelung (1), die aus einer Hülle aus weichem Material besteht, an einem Befestigungsteil (2), dadurch gekennzeichnet, daß es in den folgenden Operationen besteht:
   - im Längsschlitzen bis zu einer vorgegebenen Länge und in gleichen Abständen eines Endteils der besagten Hülle, um eine Mehrzahl von Bändern zu erzeugen,
   - im Erzeugen nach einem der Ansprüche 1, 2, 3, 4 oder 5 eines Kissens (12) in der Form eines Fächers im Bereiche des Endrandes jedes auf diese Weise hergestellten Bandes,
   - im Verwenden eines ringförmigen Befestigungsteils (2) aus einem starren Material und mit einem ringförmigen Gehäuse (8), dessen Querschnitt die Form eines der Form der Kissen (12) entsprechenden Kreissektors aufweist, wobei das besagte Gehäuse auf den Scheitel zu mit einer im Bereich der peripheren Wand (9) des Befestigungsteils (2) entlang dessen gesamten Umfangs mündenden Öffnung versehen ist,
   - im Anordnen der verschiedenen Kissen (12) nebeneinander innerhalb des besagten Gehäuses (8) des Befestigungsteils (2).

8. Verfahren nach Anspruch 7, dadurch gekennzeichnet, daß es darin besteht, das ringförmige Gehäuse (8) des Befestigungsteils so anzuordnen, daß dessen Quersymmetrieebene im wesentlichen zu der Hüllenachse rechtwinkelig ist.

9. Verfahren nach einem der Ansprüche 7 oder 8 zur Befestigung an einem Befestigungsteil (2) einer Ummantelung (1) allgemein zylindrischer Form aus rechteckigen und der Länge nach zusammengesetzten Bahnen (13) gleicher Breite, dadurch gekennzeichnet, daß es im Unterbrechen des Verbandes der besagten Bahnen in einem bestimmten Abstand von deren Längsende besteht, um mehrere Bänder zu bilden und den Außenrand jedes Bandes so zu gestalten, daß nach einem der Ansprüche 1, 2, 3, 4 oder 5 eine Mehrzahl von Kissen (12) in der Form eines Fächers gebildet wird.

10. Verfahren nach einem der Ansprüche 7, 8 oder 9, dadurch gekennzeichnet, daß das Befestigungsteil (2) in zwei ringförmige Teile (3, 4) mit gegenüberliegenden Oberflächen (3a, 4a) zerlegbar ist, wobei die besagten Oberflächen so beschaffen sind, daß im zusammengesetzten Zustand der besagten Teile das ringförmige Gehäuse (8) gebildet wird.

11. Verfahren nach Anspruch 10, dadurch gekennzeichnet, daß das ringförmige Gehäuse (8) im Inneren des Befestigungsteils angeordnet wird sowie darin, daß es darin besteht, die beiden ringförmigen Teile (3, 4) mit Hilfe von Schraubvorrichtungen (5, 6) zu beiden Seiten des besagten ringförmigen Gehäuses zu verbinden.

12. Verfahren nach einem der Ansprüche 7 bis 11, dadurch gekennzeichnet, daß es in der Verwendung eines dichten Bandes (19) besteht, das einerseits an der Innenfläche der Ummantelung (1) rechts von dem Ende der Längsbahnen angebracht ist, um als Halteband für die besagten Schlitze zu dienen, und andererseits an dem Befestigungsteil (2).

13. Verfahren nach Anspruch 12, dadurch gekennzeichnet, daß es in der Verwendung eines dichten Bandes (19) besteht, dessen Länge so beschaffen ist, daß es während der Ausübung von Zug auf die Ummantelung (1) nicht durch Zug beansprucht wird.

14. Verfahren nach einer der Ansprüche 7 bis 13 zur Anbringung, an einem ringförmigen Befestigungsteil (2), eines Netzwerks von Verstärkungen (22), das sich der Länge nach entlang einer Ummantelung von allgemein zynischerer Form erstreckt, wobei das besagte Verfahren dadurch gekennzeichnet ist, daß es darin besteht, daß die besagten Verstärkungen an dem besagten Befestigungsteil so angeordnet sind, daß sie eine strahlförmige Struktur bilden, deren Schenkel am Fuße der besagten Ummantelung gekreuzt sind.

15. Verfahren nach Anspruch 14 zur Befestigung an einem Befestigungsteil eines Netzwerks von Längsverstärkungen (22), dadurch gekennzeichnet, daß es in den folgenden Operationen besteht:
   - in der Verwendung eines Endringes (41) mit einer äußeren peripheren Oberfläche (42), einer ringförmigen Aussparung (43) und peripheren Bereichen (46), von denen jede mit Stiften (47) versehen ist,
   - in der Anbringung des besagten Endringes (41) konzentrisch um das Befestigungsteil (2),
   - in der Befestigung der Längsverstärkungen (22) wechselweise an den Stiften (47) der einen und der anderen peripheren Bereiche (46) des Endringes (41),
   - in der Anordnung innerhalb der ringförmigen Aussparung (43) des Endringes (41) eines Feststellkragens (44) aus einem wenig dehnbaren Material mit hoher Zugfestigkeit, zwecks Aufnahme der auf die Verstärkungen einwirkenden Längsspannungen, indem auf den besagten Feststellkragen Zug ausgeübt wird.

16. Vorrichtung zur Durchführung eines Verfahrens nach Anspruch 7 zwecks Befestigung einer aus einer Hülle aus weichem Material bestehenden Ummantelung (1) an einem ringförmigen Befestigungsteil (2) aus einem starren Material und aus zwei ringförmigen Stücken (3, 4) bestehend, wobei die besagte Vorrichtung dadurch gekennzeichnet ist, daß die beiden ringförmigen Teile (3, 4) einerseits gegenüberliegende Zusammenbauflächen (3a, 4a) besitzten, die so gestalten sind, daß sie ein ringförmiges Gehäuse (8) mit einem sich ausweitenden Querschnitt zur Aufnahme der Ummantelungskissen besitzen, und andererseits daß das Befestigungsteil (2) eine externe periphere Oberfläche (9) mit einem in das Gehäuse (8), auf den Scheitel des letzteren zu führenden ringförmigen Schlitz aufweist.

17. Vorrichtung nach Anspruch 16, dadurch gekennzeichnet, daß das ringförmige Gehäuse (8) einen Querschnitt in der Form eines Kreissektors aufweist, dessen Symmetrieachse zu der Achse des Ballons senkrecht ist.

18. Vorrichtung nach einem der Ansprüche 16 oder 17, dadurch gekennzeichnet, daß das ringförmige Gehäuse (8) im Innern des Befestigungsteils (2) vorgesehen ist, wobei die besagte Vorrichtung folgende Elemente umfaßt:
– ein dichtes Band (19), das einerseits an der inneren Oberfläche der Hülle angebracht ist, so daß es als Halteband der in dem Endteil der besagten Hülle vorgesehenen Längsschlitze dient, und andererseits an dem Befestigungsteil (2),
– Mittel zur Verbindung der beiden ringförmigen Teile (3, 4) mit Schraubvorrichtungen (5, 6) zu beiden Seiten des ringförmigen Gehäuses (8).

19. Vorrichtung nach einem der Ansprüche 16, 17 oder 18 zur Befestigung einer Ummantelung (1) allgemein zylindrischer Form, die äußerlich durch ein Netzwerk von sich der Länge nach entlang der besagten Ummantelung erstreckenden Verstärkungen (22) verstärkt ist, an einem Befestigungsteil (2), wobei die besagte Vorrichtung dadurch gekennzeichnet ist, daß sie Mittel zur Befestigung (30, 32, 33, 34; 41–48) umfaßt, und zwar sind die besagten Verstärkungen so beschaffen, daß sie gemäß einer strahlenförmigen Struktur mit gekreuzten Schenkeln am Boden der besagten Ummantelung angeordnet werden können.

20. Vorrichtung nach Anspruch 19, dadurch gekennzeichnet, daß die Mittel zur Befestigung der Längsverstärkung (22) folgende Teile umfassen:
– einen Endring (41) aus einem starren Material mit einer externen peripheren Oberfläche (42), die eine ringförmige Aussparung (43) aufweist, wobei der besagte Endring periphere Bereiche (46) umfasst, von denen jeder mehrere vorstehende Stifte (47) besitzt,
– Mittel (45) zur Befestigung des Endrings (41) an dem Befestigungsteil (2), die so beschaffen sind, daß sie den besagten Endring im Verhältnis zu dem besagten Befestigungsteil konzentrisch positionieren,
– einen Feststellkragen (44) innerhalb der ringförmigen Aussparung (43), der aus einem Kabel aus einem wenig dehnbaren Material mit hoher Zugfestigkeit, das im Inneren der besagten Aussparung gewickelt ist, besteht.

## Claims

1. Method of attaching a longitudinal end of a strip of flexible material to a fastening part, characterised in that it consists:
– in longitudinally folding said end at least once on to itself so as to produce at least one seam (14, 15),
– in gathering the seamed end in pleated manner so as to produce a pad (12) in the shape of a fan,
– in using a fastening part endowed with a housing (8) having a longitudinal section of flared shape matching the shape of the pad, said housing having an open longitudinal end in the direction of its apex,
– in arranging pad (12) in said housing of the fastening part, whereby the strip extends beyond said housing through the open end of the latter so as to cause automatic blocking of the pad when the strip is subjected to tension.

2. Method according to claim 1, characterised in that it consists in folding the end of the strip at least twice on to itself so as to produce at least one double seam (14, 15) the latter seam (15) having a width (1) lower than width (L) of the former.

3. Method according to one of claims 1 or 2, characterised in that it consists in arranging the seat of the fastening part so that its axis of symmetry is situated in the extension of the longitudinal axis of the strip.

4. Method according to one of claims 1, 2 or 3, characterised in that it consists in gluing to each other the opposite faces of each seam (14, 15) and the opposite faces of the two successive seams.

5. Method according to one of claims 1, 2, 3 or 4, characterised in that it consists in sewing the different folds of seams (14, 15) by means of threads (17) consisting of a material with high tensile strength.

6. Method according to one of claims 1, 2, 3, 4 or 5, characterised in that in consists in injecting a hardenable resin into the housing of the fastening part, after inserting pad (12), with a view to immersing said pad in said resin.

7. Method according to one of the preceding claims for attaching a casing (1) made from at least one sheath of flexible material to a fastening part (2), characterised in that it consists:
– in cutting longitudinally over a given length and at equidistant intervals an end portion of said sheath in order to form a plurality of strips,
– in forming, in accordance with one of claims 1, 2, 3, 4 or 5, a pad (12) having the shape of a fan at the level of the extreme edge of each strip thus produced,
– in utilising an annular fastening part (2) made by means of a rigid material and having an annular housing (8) with a section shaped in the manner of the sector of a circle matching the shape of pads (12), said housing being provided, in the direction of its apex, with an opening issuing at the level of peripheral wall (9) of fastening part (2), over the entire circumference of the litter,
– in arranging the different pads (12) next to one another within the said housing (8) of fastening part (2).

8. Process according to claim 7, characterised in that it consists in arranging annular housing (8) of the fastening part in such a way that its transverse plane of symmetry is substantially at right angles to the axis of the sheath.

9. Method according to one of claims 7 or 8 for attaching to a fastening part (2) a casing (1) of generally cylindrical form made by means of rectangular gores (13) of identical width, assembled longitudinally, characterised in that it consists in interrupting the assembly of said gores at a specified distance from their longitudinal end in order to form a plurality of strips and in forming the extreme edge of each strip in such a way as to produce, in accordance with one of claims 1, 2, 3, 4 or 5, a plurality of pads (12) in the shape of a fan.

10. Method according to one of claims 7, 8 or 9, characterised in that fastening part (2) can be dismantled into two annular pieces (3, 4) having opposite faces (3a, 4a) so designed as to form, in the assembled position of said pieces, annular housing (8).

11. Method according to claim 10, characterised in that annular housing (8) is arranged at the core of the fastening part and in that it consists in assembling the two annular pieces (3, 4) by means of screwing devices (5, 6) arranged on either side of said annular housing.

12. Method according to one of claims 7 to 11, characterised in that it consists in using a sealed flap (19) secured, on the one hand, to the inner face of casing (1) to the right of the end of the longitudinal slits so as to serve as a retaining band for said slits and, on the other hand, to fastening pit (2).

13. Method according to claim 12, characterised in that it consists in using a sealed flap (19) of such length as to enable it to remain free from tensile stresses when casing (1) is subjected to tension.

14. Method according to one of claims 7 to 13 for attaching, to an annular fastening part (2), a network of reinforcements (22) extending longitudinally along a casing of generally cylindrical form, said method being characterised in that it consists in arranging said reinforcements on said fastening part so that they form a radiating structure with legs crossed at the base of said casing.

15. Process according to claim 14 for attaching, to a fastening part, a network of longitudinal reinforcements (22), characterised in that it consists:
   – in utilising an annular rim (41) comprising an outer peripheral face (42) provided with an annular recess (43) and peripheral surfaces (46) each provided with studs (47),
   – in securing the said rim (41) concentrically about fastening part (2),
   – in attaching longitudinal reinforcements (22) alternately to studs (47) of one and the other peripheral surface (46) of rim (41),
   – in arranging, within annular recess (43) of rim (41), a locking collar (44) made of a material of low extensibility and high resistance to tension, with a view to absorbing the longitudinal stresses acting upon the reinforcements, by subjecting said locking collar to tension.

16. Device for implementing a method according to claim 7 intended for attaching a casing (1) made by means of a sheath of flexible material to annular fastening part (2) made from a rigid material and consisting of two annular pieces (3, 4), said device being characterised in that, on the one part, the two annular pieces (3, 4) have opposite assembly faces (3a, 4a) so designed as to form an annular housing (8) of flared section and intended to receive casing pads, and in that, on the other hand, fastening part (2) comprises an outer peripheral face (9) provided with an annular split leading into housing (8), in the direction of said housing.

17. Device according to claim 16, characterised in that annular housing (8) has a section shaped in the manner of the sector of a circle with an axis of symmetry at right angles to the axis of the balloon.

18. Device according to one of claims 16 or 17, characterised in that annular housing (8) is arranged at the core of fastening part (2), said device comprising:
   – a sealed flap (19) secured, on the one hand, to the inner face of the sheath so as to serve by way of retaining band of the longitudinal splits provided at the extreme part of said sheath and, on the other hand, to fastening part (2),
   – means for assembling the two annular pieces (3, 4), comprising screwing devices (5, 6) arranged on either side of annular housing (8).

19. Device according to one of claims 16, 17 or 18 for attaching, to a fastening part (2), a casing (1) of generally cylindrical form reinforced externally by a network of reinforcements (22) extending longitudinally along said casing, said device being characterised in that it comprises attaching means (30, 32, 33, 34; 41–48), said reinforcements being so designed as to enable their arrangement in the manner of a radiating structure with crossed legs, at the base of said casing.

20. Device according to claim 19, characterised in that the means for attaching longitudinal reinforcements (22) comprise:
   – a rim (41) made from rigid material with an outer peripheral face (42) provided with an annular recess (43), said rim comprising peripheral surfaces (46), each of which is provided with a plurality of projecting studs (47),
   – means (45) for attaching rim (41) to fastening part (2), so designed as to position said rim concentrically in relation to said fastening part,
   – locking collar (44) arranged in annular recess (43) and consisting in a cable of material of low extensibility and high resistance to tension wound within said recess.

Fig. 1a

14

Fig. 1b.

l

15

L

Fig. 2

~13~

16

15

14

~13~

Fig. 3

15

14

18

17

Fig. 4

Fig. 5

Fig. 6

Fig. 7

EP 0 265 980 B1

Fig. 8